# EUROPEAN PATENT SPECIFICATION

(11) **EP 0 588 990 B1**
(45) Date of publication and mention of the grant of the patent: **12.02.1997**
(21) Application number: 92924641.1
(22) Date of filing: 02.12.1992
(51) Int. Cl.: A61C 17/34

(54) **ELECTRIC TOOTHBRUSH**
Elektrische Zahnbürste
BROSSE A DENTS ELECTRIQUE

(30) Priority: 03.12.1991 DE 4139788
(43) Date of publication of application: 30.03.1994
(73) Proprietor: BAUSCH & LOMB INCORPORATED, Rochester New York 14601-0054 (US)
(72) Inventor: HOMMANN, Edgar, CH-3257 Grossaffoltern (CH)
(74) Representative: Schlagwein, Udo, Dipl.-Ing.
(86) International application number: EP9202780
(87) International publication number: WO9310721

(56) References cited:
- EP-A- 0 357 863
- EP-A- 0 378 101
- US-A- 4 156 620

## Description

The invention relates to an electric toothbrush with a manually guidable handle part having a motor and a gear, and a push-on brush which is to be fastened thereon and which has a plurality of rotatably arranged bristle holders which each have an eccentric peg engaging in transversely extending grooves in a connecting rod which may be caused to reciprocate in the direction of its longitudinal axis by the gear by means of a toothbrush arbor and a second cam.

EP-A-0357863 relates to a toothbrush of this type. With the known toothbrush, the push-on brush may be pushed rotatably round its longitudinal axis by means of a locking connection onto the front region of the casing of the handle part. The toothbrush arbor and therefore also the connecting rod are caused to oscillate round their longitudinal axis and also to reciprocate in the direction of the longitudinal axis by means of a rocker and a cam engaging therein. The reciprocating movement of the connecting rod is converted into an alternating rotational movement of the tufts of bristles in the brush head of the push-on brush while the oscillating movement of the connecting rod leads to a corresponding oscillating movement of the entire push-on brush.

The drive of the tufts of bristles by a connecting rod leads to problems if the individual tufts of bristles are to be rotated to and fro with a greater angle of rotation. For this purpose, it is necessary to increase the stroke of the connecting rod by increasing the stroke of the toothbrush arbor, and this can give rise to greater eccentricity of the cam of the gear and can therefore lead to an undesirable increase in the size of the gear.

It is known from German Patent Application P 41 38 021.5, which has not been anticipated, to dispense with the connecting rod for increasing the rotational angle of the tuft of bristles and instead to drive the tufts of bristles by means of a rotatable shaft. However, as toothbrushes with a connecting rod having transverse grooves and eccentric members of the bristle holders engaging therein have proven appropriate, attempts have been made to maintain this principle of production of the alternating rotational movement of the tufts of bristles.

The object of the invention is to design a toothbrush of the type mentioned at the outset such that a stroke of its connecting rod which is as great as possible may be achieved with a gear which is as compact as possible.

According to the invention, this object is achieved by providing an electric toothbrush comprising a manually guidable handle part, having a motor and a gear, and a push-on brush having a stem part adapted to be fitted to the handle part and a plurality of rotatably arranged bristle holders which each have an eccentric peg, a connecting rod extending through the stem part and having a plurality of transversely extending grooves in each of which an eccentric peg of a respective bristle holder is engaged, said connecting rod being caused to reciprocate in the direction of its longitudinal axis by the gear by means of a toothbrush arbor and a second cam, wherein the stem part of the push-on brush is adapted to be pushed onto a hollow shaft through which the toothbrush arbor extends and which is displaceably arranged in the handle part and wherein the gear has a first cam which is offset from the second cam by 180° for the displacement of the hollow shaft in the direction of its longitudinal axis and in the opposite direction to the displacement of the toothbrush arbor.

The hollow shaft enables the push-on brush to be displaced independently in the direction of its longitudinal axis by displacement of the hollow shaft. In this way, the two cams offset by 180° allow the connecting rod to be moved forwardly when the hollow shaft and therefore the push-on brush move backwardly. A relative movement between the connecting rod and push-on brush thus occurs which, if the eccentricity of the cams is equal, is twice as great as the reciprocating movement of the connecting rod. Owing to the invention, therefore, a large rotational angle of the bristle holders may be achieved with a connecting rod without undesirably great eccentricity being required for this purpose.

The hollow shaft performs an elliptical movement with the push-on brush while the bristle holders with the tufts of bristles rotate in alternate directions of rotation if, according to an advantageous development of the invention, the gear has a gear wheel which is arranged to be driven by a pinion mounted on the drive shaft of the motor to revolve around an axis of rotation extending transversely to the main direction of the handle part, said gear wheel being designed as a bevel wheel or crown wheel and the first cam extending parallel to the axis of rotation of the gear wheel, if the first cam engages in a receiver in a rocker connected to the hollow shaft in an orientation parallel to the axis of rotation of the gear wheel and if the second cam extends parallel to the said axis and engages in a slot of a link block extending transversely to the toothbrush arbor and rigidly connected to one end thereof.

The electric toothbrush may be guided particularly conveniently and without contortion of the arm if, according to a further development of the invention, the handle part consists of a hand piece and a front piece and if the front piece is designed to pivot to a limited extent relative to the hand piece about a pivot axis aligned with the axis of the gear wheel.

The invention will now be described in detail, by way of example, with reference to the drawings, in which:-
Figure 1 is a perspective view of one embodiment of a toothbrush according to the invention;
Figure 2 is an exploded perspective view of the push-on brush part of the toothbrush shown in Figure 1;
Figure 3 is a longitudinal section through the gear region of the toothbrush; and
Figure 4 is a plan view of a link block of the gear.

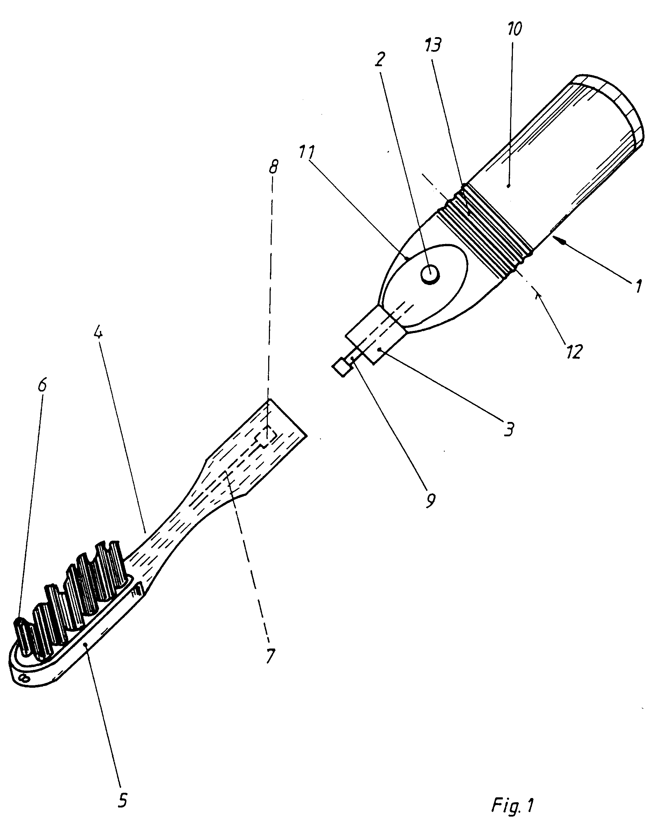

Referring to the drawings, Figure 1 shows an electric toothbrush in the not yet assembled state with a manually guidable handle part 1 having a switch 2 for switching the electric toothbrush on and off. From the handle part 1 there projects a hollow shaft 3 onto which a push-on brush 4 may be pushed which is held on the hollow shaft 3 by a locking connection (not shown) in the pushed-on state.

The push-on brush 4 has a brush head 5 with a plurality of tufts of bristles 6 arranged rotatably therein. For driving the tuft of bristles 6 there is arranged in the push-on brush 4 a connecting rod 7 which is illustrated in broken lines and which is adapted to be coupled by means of a coupling 8 to a toothbrush arbor 9 arranged coaxially to the hollow shaft 3 in the handle part 1.

The hollow shaft 3 is driven such that it performs an oscillating movement round its longitudinal axis and at the same time reciprocates in the direction of its longitudinal axis. This displacement of the hollow shaft 3 is phase shifted by 180° relative to a reciprocating displacement of the connecting rod 7 also extending in the longitudinal direction.

Figure 1 shows that the handle part 1 consists of a hand piece 10 and a front piece 11. This front piece 11 is pivotal to a limited extent round a pivot axis 12 extending transversely to the longitudinal axis of the toothbrush. The differences in spacing occurring between hand piece 10 and front piece 11 are compensated by a bellows 13.

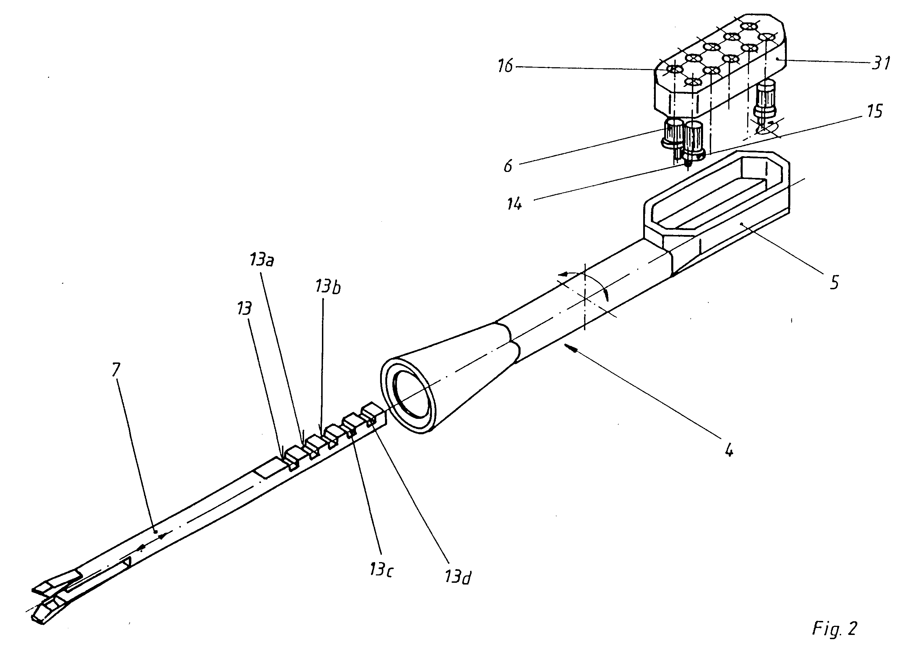

Figure 2 shows how a rotational movement is produced from a reciprocating movement by means of the connecting rod 7. This part of the electric toothbrush shown in Figure 2 corresponds completely to that in EP-A-0357863. It can be seen that the connecting rod 7 has a total of five transversely extending grooves 13, 13a, 13b, 13c, 13d which are arranged in succession at its brush head end and into which there engage eccentric pegs 14 projecting from bristle holders 15 holding the tufts of bristles 6. The bristle holders 15 may be inserted from below into holes 16 in an insert 31 which, in turn, is held in the brush head 5.

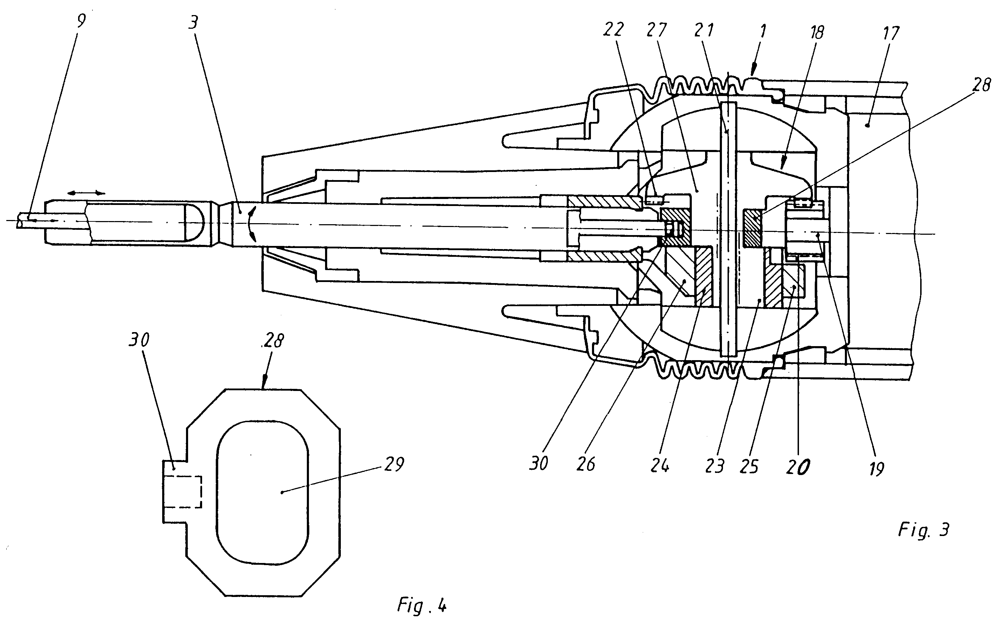

Figure 3 shows a section through a front region of the handle part 1 with a motor 17 which is arranged to drive the hollow shaft 3 and the toothbrush arbor 9 via a gear 18. The motor 17 has a motor shaft 19 with a pinion 20. The pinion 20 continuously drives a gear wheel 22 which is rotatably mounted on a shaft 21 which in turn is fixedly mounted in the handle part and extends transversely to the longitudinal axis of the said handle part 1, the gear wheel 22 being designed as a bevel wheel or crown wheel. A first cam 23 which engages in a sliding block 24 of a rocker 25 is provided parallel to the axis on the gear wheel 22. The rocker 25 extends parallel to the hollow shaft 3 and is rigidly connected to it by a radial connecting piece 26. The shaft 21 simultaneously forms the pivot axis 12 shown in Figure 1. The exact configuration of this part of the gear 18, which is to be called a push/rock type gear, is described in the above-mentioned EP-A-0357863. The hollow shaft 3 performs an elliptical movement owing to the known push/rock type gear.

It is important for the invention that the gear wheel 22 has a second cam 27 which is phase-shifted by 180° relative to the first cam 23. A link block 28, the design of which is shown in Figure 4, rests on the second cam 27. As shown therein, the link block 28 has a link guide 29 which extends transversely to the longitudinal axis of the hollow shaft 3 and in which the second cam 27 shown in Figure 3 engages. The link block 28 has, on the side of the toothbrush arbor 9, a peg 30 which is also shown in Figure 3 and in which one end of the toothbrush arbor 9 engages.

When the gear wheel 22 rotates, the second cam 27 causes the link block 28 to reciprocate in the longitudinal direction of the toothbrush so that the toothbrush arbor 9 performs a corresponding displacement. At the same time, the first cam 23 causes the hollow shaft 3, which is phase shifted by 180°, to reciprocate so that a relative movement takes place between the hollow shaft 3 and therefore the toothbrush head 5 and the connecting rod 7 which corresponds to the sum of the eccentricities of the two cams 23, 27.

## Claims

1. An electric toothbrush comprising a manually guidable handle part (1), having a motor (17) and a gear (18), and a push-on brush (4) having a stem part adapted to be fitted to the handle part and a plurality of rotatably arranged bristle holders (15) which each have an eccentric peg (14), a connecting rod (7) extending through the stem part and having a plurality of transversely extending grooves (13, 13a, 13b) in each of which an eccentric peg of a respective bristle holder is engaged, said connecting rod (7) being caused to reciprocate in the direction of its longitudinal axis by the gear by means of a toothbrush arbor (9) and a second cam (27), characterised in that the stem part of the push-on brush (4) is adapted to be pushed onto a hollow shaft (3) through which the toothbrush arbor (9) extends and which is displaceably arranged in the handle part (1) and wherein the gear (18) has a first cam (23) which is offset from the second cam (27) by 180° for the displacement of the hollow shaft (3) in the direction of its longitudinal axis and in the opposite direction to the displacement of the toothbrush arbor (9).

2. An electric toothbrush according to claim 1, wherein the gear (18) has a gear wheel (22) which is arranged to be driven by a pinion (20) mounted on a drive shaft (19) of the motor to revolve around an axis (21) of rotation extending transversely to the main direction of the handle part, said gear wheel being designed as a bevel wheel or crown wheel and the first cam (23) extending parallel to the axis of rotation of said gear wheel, wherein the first cam (23) engages in a receiver in a rocker (25) connected to the hollow shaft (3) in an orientation parallel to the axis of rotation of the gear wheel and wherein the second cam (27) extends parallel to the said axis and engages in a slot of a link block (28) extending transversely to the toothbrush arbor (9) and rigidly connected to one end thereof.

3. An electric toothbrush according to claim 2, wherein the handle part (1) consists of a hand piece (10) and a front piece (11) and the front piece is pivotal to a limited extent relative to the hand piece about a pivot axis (12) aligned with the axis of rotation (21) of the gear wheel (22).

## Patentansprüche

1. Elektrische Zahnbürste bestehend aus einem von Hand zu führenden, einen Motor (17) und ein Getriebe (18) aufweisenden Griffteil (1) und einer Aufsteckbürste (4), welche einen zum Befestigen auf den Griffteil ausgebildeten Schaft und mehrere drehbar angeordnete Borstenträger (15) hat, welche jeweils einen Exzenterzapfen (14) aufweisen, wobei eine Schubstange (7) durch den Schaft verläuft, welche eine Mehrzahl quer verlaufender Nuten (13, 13a, 13b) hat, in welche jeweils ein Exzenterzapfen des jeweiligen Borstenträgers greift, wobei die genannte Schubstange (7) von dem Getriebe mittels einer Zahnbürstenachse (9) und eines zweiten Exzenters (27) in eine in Richtung ihrer Längsachse hin- und hergehende Bewegung versetzbar ist, **dadurch gekennzeichnet**, dass der Schaft der Aufsteckbürste (4) zum Aufstecken auf eine Hohlwelle (3) ausgebildet ist, in welcher die Zahnbürstenachse (9) verläuft und welche im Griffteil (1) beweglich angeordnet ist und dass das Getriebe (18) einen gegenüber dem zweiten Exzenter (27) um 180° versetzten ersten Exzenter (23) zum Verschieben der Hohlwelle (3) in Richtung ihrer Längsachse gegenläufig zur Verschiebung der Zahnbürstenachse (9) aufweist.

2. Elektrische Zahnbürste nach Anspruch 1, **dadurch gekennzeichnet**, dass das Getriebe (18) ein Zahnrad (22) hat, welches so angeordnet ist, dass es von einem auf einer Motorwelle (19) des Motors angeordneten Ritzel (20) angetrieben wird und eine quer zur Haupterstreckung des Griffteils verlaufende Drehachse (21) umläuft, wobei das genannte Zahnrad als Kegelrad oder Kronenzahnrad ausgebildet ist und der erste Exzenter (23) parallel zur Drehachse des genannten Zahnrads verläuft, dass der erste Exzenter (23) in eine Aufnahme einer mit der Hohlwelle (3) in paralleler Ausrichtung zur Drehachse des Zahnrads verbundenen Schwinge (25) greift und dass der zweite Exzenter (27) parallel zur genannten Achse verläuft und in eine quer zur Zahnbürstenachse (9) verlaufende Kulissenführung (29) eines Kulissensteins (28) eingreift und fest mit einem Ende der Zahnbürstenachse (9) verbunden ist.

3. Elektrische Zahnbürste nach dem Anspruch 2, **dadurch gekennzeichnet**, dass das Griffteil (1) aus einem Handstück (10) und einem Vorderstück (11) besteht und dass das Vorderstück (11) gegenüber dem Handstück um eine mit der Drehachse (21) des Zahnrades (22) fluchtende Kippachse (12) begrenzt kippbar ausgebildet ist.

## Revendications

1. Une brosse à dents électrique composée d'une partie poignée (1) orientable manuellement, ayant un moteur (17) et un mécanisme (18), et une brosse emboîtable (4) à partie tige conçue pour être enfoncée dans la partie poignée et à plusieurs supports de poils (15) placés de façon à ce qu'ils puissent tourner et ayant chacun une fiche excentrique (14), une tige de connexion (7) traversant la partie tige et ayant plusieurs rainures (13, 13a, 13b) placées transversalement dans chacune desquelles une fiche excentrique d'un support de poils correspondant s'engage, ladite tige de connexion (7) étant soumise à un mouvement alternatif dans le sens de son axe longitudinal par le mécanisme au moyen d'un arbre (9) de brosse à dents et d'une seconde came (27) se caractérisant par le fait que la partie tige de la brosse à dents emboîtable (4) est conçue pour être enfoncée dans un essieu creux (3) que traverse l'arbre (9) de la brosse à dents et qui est placé de manière amovible dans la partie poignée (1); et dans laquelle le mécanisme (18) a une première came (23) qui est située à un angle de 180° par rapport à la seconde came (27) pour que l'essieu creux (3) se déplace dans le sans de son axe longitudinal et dans le sans opposé au déplacement de l'arbre (9) de la brosse à dents.

2. Une brosse à dents électrique selon la revendication 1, dans laquelle le mécanisme (18) a un engrenage (22) qui est placé de manière à être actionné par un pignon (20) monté sur un essieu d'actionnement (19) du moteur de façon à tourner autour d'un axe (21) de rotation placé transversalement à la direction principale de la partie poignée, ledit engrenage étant conçu comme une roue conique ou comme une couronne dentée et la première came (23) étant placée parallèlement à l'axe de rotation dudit engrenage; dans laquelle la première came (23) s'engage dans un réceptacle de balancier (15) connecté à l'essieu creux (3) parallèlement à l'axe de rotation de l'engrenage; et dans laquelle la seconde came (27) est placée parallèlement audit axe et s'engage dans une fente d'un bloc de liaison (28) placé transversalement à l'arbre (9) de la brosse à dents et connecté de manière rigide à l'une de ses extrémités.

3. Une brosse à dents électrique selon la revendication 2, dans laquelle la partie poignée (1) est constituée d'une pièce pour la main (10) et d'une pièce frontale (11) et la pièce frontale est pivotante jusqu'à un certain point par rapport à la pièce pour la main autour d'un pivot (12) aligné sur l'axe de rotation (21) de l'engrenage (22).
